# EUROPÄISCHE PATENTSCHRIFT

(11) **EP 3 661 782 B1**
(45) Veröffentlichungstag und Bekanntmachung des Hinweises auf die Patenterteilung: **18.10.2023**
(21) Anmeldenummer: 18746121.5
(22) Anmeldetag: 18.07.2018
(51) Int. Cl.: B60K 6/48, B60K 6/365, B60K 6/547, F16H 3/72

(54) **HYBRIDANTRIEBSANORDNUNG**
HYBRID DRIVE ARRANGEMENT
SYSTÈME DE PROPULSION HYBRIDE

(30) Priorität: 02.08.2017 DE 102017213356
(43) Veröffentlichungstag der Anmeldung: 10.06.2020
(73) Patentinhaber: Robert Bosch GmbH, 70442 Stuttgart (DE)
(72) Erfinder: HUBER, Thomas, 74915 Daisbach (DE); ESZTERLE, Dominik, 74078 Heilbronn (DE); SMEJKAL, Tom, 01069 Dresden (DE); DEMPEL, Rolf Lucius, 74354 Besigheim (DE); WIRTH, Christian, 85452 Eichenried (DE); BRUMMER, Simon, 82194 Gröbenzell (DE)
(86) Internationale Anmeldenummer: PCT/EP2018/069516
(87) Internationale Veröffentlichungsnummer: WO 2019/025187

(56) Entgegenhaltungen:
- WO-A1-2015/082166
- DE-A1-102008 052 009
- DE-A1-102014 201 646
- JP-A- 2009 126 233
- US-A- 5 135 444
- US-A1- 2007 243 966
- US-A1- 2008 064 550

## Beschreibung

Die Erfindung betrifft eine Hybridantriebsanordnung mit einem Getriebe und ein Fahrzeug mit einer Hybridantriebsanordnung.

### Stand der Technik

Getriebe für Hybridantriebsanordnungen sind aus dem Stand der Technik bekannt. Beispielsweise zeigt die WO2010/009943 A1 ein Doppelkupplungsgetriebe, welches den Betrieb eines Hybridfahrzeugs verbrennungsmotorisch, elektromotorisch und mit beiden Antriebsaggregaten zusammen ermöglicht. Derartige Getriebe sind komplex, schwer und teuer. Es besteht Bedarf an Getriebetopologien mit reduzierter mechanischer Komplexität, verringertem Raumbedarf und verringertem Gewicht.

Der Begriff "gekoppelt" bzw. "angekoppelt" wird im Folgenden im Sinne einer festen Verbindung benutzt. Im Gegensatz dazu umfasst der Begriff "koppelbar" im Rahmen der vorliegenden Beschreibung sowohl feste als auch schaltbare Verbindungen. Ist konkret eine schaltbare Verbindung gemeint, wird in der Regel das entsprechende Schaltelement, insbesondere eine Bremse oder eine Kupplung, explizit angegeben. Ist hingegen konkret eine feste, starre oder drehfeste Verbindung gemeint, wird in der Regel der Begriff "gekoppelt" bzw. "angekoppelt" verwendet und auf die Verwendung des Begriffs "koppelbar" verzichtet. Die Verwendung des Begriffs "koppelbar" ohne Angabe eines konkreten Schaltelementes deutet somit auf den beabsichtigten Einschluss beider Fälle hin. Diese Unter scheidung erfolgt allein zugunsten der besseren Verständlichkeit und insbesondere zur Verdeutlichung, wo das Vorsehen einer schaltbaren Verbindung anstelle einer in der Regel leichter realisierbaren festen Verbindung beziehungsweise Koppelung zwingend erforderlich ist. Die obige Definition des Begriffs "gekoppelt" bzw. "angekoppelt" ist daher keinesfalls so eng auszulegen, dass willkürlich zu Umgehungszwecken eingefügte Kupplungen aus seinem Wortsinn herausführten.

Aus der JP 2009 126233 A, US 2008/064550 A1 und der DE 10 2014 201646 A ist jeweils ein Getriebe für eine Hybridantriebsanordnung bekannt.

### Offenbarung der Erfindung

Es wird eine Hybridantriebsanordnung mit einer Verbrennungskraftmaschine als erstes Antriebsaggregat, einer elektrischen Maschine als zweites Antriebsaggregat und einem mit den zwei Antriebsaggregaten gekoppelten Getriebe bereitgestellt, wobei das Getriebe eine Eingangswelle und eine Ausgangswelle, mindestens ein erstes, ein zweites, ein drittes und ein viertes Schaltelement, und mindestens ein doppeltes Planetengetriebe hat, mit einem ersten Sonnenrad und einem ersten Hohlrad und einem zweiten Sonnenrad und einem zweiten Hohlrad und einem Planetenträger,
wobei das erste Antriebsaggregat mit der Eingangswelle (10) gekoppelt ist und ein zweites Antriebsaggregat (8) mit dem ersten Hohlrad des doppelten Planetengetriebes (5) gekoppelt ist,
und wobei die Eingangswelle mit dem Planetenträger des doppelten Planetengetriebes gekoppelt ist
und die Ausgangswelle mittels dem ersten Schaltelement koppelbar ist mit dem ersten Hohlrad des doppelten Planetengetriebes und mittels dem zweiten Schaltelement koppelbar ist mit dem zweiten Hohlrad des doppelten Planetengetriebes.

Das dritte Schaltelement ist dazu eingerichtet, das erste Sonnenrad des doppelten Planetengetriebes abzubremsen oder freizugeben.

Das vierte Schaltelement ist dazu eingerichtet, das zweite Sonnenrad des Planetengetriebes abzubremsen oder freizugeben.

Es wird eine Hybridantriebsanordnung mit einem Getriebe bereitgestellt. Für den Betrieb der Hybridantriebsanordnung sind zwei Antriebsaggregate an das Getriebe gekoppelt.

Das Getriebe umfasst eine Eingangswelle und eine Ausgangswelle, mindestens ein erstes und ein zweites Schaltelement und mindestens ein doppeltes Planetengetriebe mit einem ersten Sonnenrad und einem ersten Hohlrad und einem zweiten Sonnenrad und einem zweiten Hohlrad und einem, insbesondere gemeinsamen, Planetenträger. Insbesondere ist das erste und das zweite Sonnenrad außenverzahnt. Insbesondere ist das erste und das zweite Hohlrad innenverzahnt. Erste Planeten stehen im Eingriff und kämmen mit dem ersten Hohlrad, wobei sie beabstandet das erste Sonnenrad umkreisen. Zweite, insbesondere gestufte, Planeten stehen im Eingriff mit dem ersten Sonnenrad, den ersten Planeten, dem zweiten Sonnenrad und dem zweiten Hohlrad, wobei die zweiten Planeten das erste und das zweite Sonnenrad kämmend umkreisen und mit dem zweiten Hohlrad und den ersten Planeten kämmen. Insbesondere sind die ersten und zweiten Planeten außenverzahnt. Ein gemeinsamer Planetenträger fixiert die Abstände der ersten und zweiten Planeten zueinander sowie jeweils untereinander. Die Eingangswelle ist mit dem Planetenträger des doppelten Planetengetriebes gekoppelt. Im Rahmen der Beschreibung ist eine Koppelung als eine Verbindung zu verstehen, welche starr, beispielsweise einstückig, beispielsweise mittels einer Welle, oder mit einer festen Übersetzung oder Getriebestufe ausgeführt ist. Die Ausgangswelle ist mittels dem ersten Schaltelement koppelbar mit dem ersten Hohlrad des doppelten Planetengetriebes und mittels dem zweiten Schaltelement koppelbar ist mit dem zweiten Hohlrad des doppelten Planetengetriebes. Insbesondere ist die Ausgangswelle mit einem Abtrieb koppelbar. Der Abtrieb ist insbesondere eine Welle oder eine Achse, die die Bewegung der Ausgangswelle auf den mechanischen Antriebsstrang eines Fahrzeugs, beispielsweise auf ein Differenzial oder auf ein Antriebsrad überträgt. Vorteilhaft wird ein Getriebe bereitgestellt, welches die Drehzahl und das Drehmoment, welches an der Eingangswelle anliegt, bei geschlossenem erstem und zweitem Schaltelement entsprechend der Übersetzungsverhältnisse in dem Getriebe auf die Ausgangswelle überträgt. Bei geöffneten ersten und zweiten Schaltelement ist die Eingangswelle von der Ausgangswelle abgekoppelt.

Für das Getriebe ist ein drittes Schaltelement vorgesehen, welches ein Freigeben oder Bremsen des ersten Sonnenrades des Planetengetriebes ermöglicht, insbesondere ein Verbinden des Sonnenrades oder ein Abstützen des Sonnenrades an einem Fixpunkt oder an einem Gehäuse des Getriebes. Das Abbremsen des ersten Sonnenrades umfasst das Reduzieren der Drehzahl des Sonnenrades, insbesondere bis zum Stillstand des Sonnenrades. Das Freigeben des ersten Sonnenrades umfasst das Lösen der Bremse, so dass das erste Sonnenrad entsprechend der auf das erste Sonnenrad wirkenden Kräfte beschleunigt. Vorteilhaft lassen sich mit der bisher beschriebenen Topologie des Getriebes mit den ersten bis dritten Schaltelementen, neben den bereits erwähnten, weitere Betriebsmodi einstellen. So ergibt sich bei geschlossenem ersten und dritten und geöffneten zweiten Schaltelement das höchste mit diesem Getriebe erzielbaren Übersetzungsverhältnis zwischen Eingangswelle und Ausgangswelle.

Für das Getriebe ist ein viertes Schaltelement vorgesehen, welches ein Freigeben oder Bremsen des zweiten Sonnenrades des Planetengetriebes ermöglicht, insbesondere ein Verbinden des zweiten Sonnenrades oder ein Abstützen des zweiten Sonnenrades an einem Fixpunkt oder an einem Gehäuse des Getriebes. Das Abbremsen des zweiten Sonnenrades umfasst das Reduzieren der Drehzahl des Hohlrades, insbesondere bis zum Stillstand des Hohlrades. Das Freigeben des zweiten Sonnenrades umfasst das Lösen der Bremse, so dass das zweite Sonnenrad entsprechend der auf das zweite Sonnenrad wirkenden Kräfte beschleunigt. Vorteilhaft lassen sich mit der bisher beschriebenen Topologie des Getriebes mit den ersten bis vierten Schaltelementen, neben den bereits erwähnten, weitere Betriebsmodi einstellen. So ergibt sich bei geschlossenen ersten und vierten und geöffneten zweiten und dritten Schaltelement insbesondere ein zweithöchstes mit diesem Getriebe erzielbares Übersetzungsverhältnis zwischen Eingangswelle und Ausgangswelle. Bei geschlossenen vierten und zweitem Schaltelement und geöffneten ersten und dritten Schaltelement ergibt sich insbesondere ein vierthöchstes mit diesem Getriebe erzielbares Übersetzungsverhältnis zwischen Eingangswelle und Ausgangswelle.

In der Erfindung ist ein erstes Antriebsaggregat eine Verbrennungskraftmaschine und mit der Eingangswelle gekoppelt und ein zweites Antriebsaggregat eine elektrische Maschine und mit dem ersten Hohlrad des doppelten Planetengetriebes gekoppelt.

An der Eingangswelle ist eingangsseitig das erste Antriebsaggregat angekoppelt.

Das zweite Antriebsaggregat ist mit dem ersten Hohlrad des doppelten Planetengetriebes gekoppelt.

Vorteilhaft kann für einen generatorischen Betrieb des zweiten Antriebsaggregates, beispielsweise einer elektrischen Maschine, beispielsweise zum Laden einer Batterie, das erste Antriebsaggregat oder der Verbrennungsmotor mittels Schließen des dritten oder des vierten Schaltelements und Öffnen des zweiten Schaltelements mit der elektrischen Maschine verbunden werden. Da dabei beide Antriebsaggregate von der Ausgangswelle abgekoppelt sind und somit kein Drehmoment auf die Ausgangswelle übertragen wird, kann dieses Laden bei beispielsweise stillstehender Ausgangswelle, also beispielsweise während des Stillstands eines Fahrzeugs, erfolgen (Standladen). Bei beispielsweise stillstehender Ausgangswelle wird eine direkte Übertragung der rotatorischen Energie des ersten Antriebsaggregates zum zweiten Antriebsaggregat oder umgekehrt, beispielsweise zum Starten eines Verbrennungsmotors, ermöglicht.

In einer weiteren Ausgestaltung der Erfindung umfasst das erste, zweite und/oder das dritte Schaltelement eine Kupplung.

Zur Verbindung der Ausgangswelle mit den genannten Komponenten des Planetengetriebes sind das erste und/oder das zweite Schaltelement als Kupplung ausgeführt. Bei einer derartigen Kupplung kann es sich insbesondere um eine Trockenkupplung, Nasskupplung oder Klauenkupplung handeln. Vorteilhaft wer den Möglichkeiten für eine steuerbare Verbindung der Ausgangsswelle mit den Komponenten der Planetengetriebe bereitgestellt.

In einer anderen Ausgestaltung der Erfindung umfasst das dritte und/ oder vierte Schaltelement eine Bremse.

Das dritte und/ oder vierte Schaltelement ist als Bremse, insbesondere eine Trocken- oder Nassbremse oder als Klauenkupplung, ausgeführt. Vorteilhaft wird eine Möglichkeit zur steuerbaren Freigabe und Abbremsung des ersten oder zweiten Sonnenrades des doppelten Planetengetriebes bereitgestellt.

Ein leistungsverzweigter Betrieb des Getriebes (eCVT-Modus) wird durch Schließen des zweiten und dem dritten oder vierten Schaltelements und Öffnen des ersten Schaltelements ermöglicht. Dabei wirken das erste Antriebsaggregat auf den Planetenträger des doppelten Planetengetriebes und die elektrische Maschine auf das erste Hohlrad des doppelten Planetengetriebes, dessen zweites Hohlrad über das zweite Schaltelement mit der Ausgangswelle verbunden ist. Dabei lässt sich das Übersetzungsverhältnis zwischen Eingangswelle und Ausgangswelle über einen weiten Bereich mittels Vorgabe einer Drehzahl oder eines Drehmomentes des zweiten Antriebaggregates kontinuierlich variieren. Vorteilhaft wird ein leistungsverzweigter Betrieb, oder auch eCVT-Modus genannt, ermöglicht, bei dem sowohl die Vortriebsleistung an der Ausgangswelle als auch die Ladeleistung für den generatorischen Betrieb der elektrischen Maschine unabhängig voneinander einstellbar sind. Vorteilhaft wird ein Laden im Stand oder im Kriechen (>0km/h bis ca. 10km/h) und ein sanfter komfortabler Übergang vom Modus Standladen in den Modus Kriechladen und den Modus Fahren mit fester Übersetzung, bzw. im festen Gang ermöglicht.

Bei geöffneten erstem und zweitem Schaltelement ist die Eingangswelle, und somit das erste Antriebsaggregat, von der Ausgangswelle abgekoppelt. Bei geschlossenen erstem und geöffneten zweitem, drittem und viertem Schaltelement ist das zweite Antriebsaggregat über eine feste Übersetzung mit der Ausgangswelle verbunden, so dass ein Antreiben der Ausgangswelle nur mittels des zweiten Antriebsaggregates bei einer festen Übersetzung erfolgen kann. Mittels, insbesondere dosiertem, Schließen des dritten Schaltelements kann aus dem Fahren mittels dem zweiten Antriebsaggregat das erste Antriebsaggregat angetrieben und beispielsweise gestartet werden, nachdem das erste Antriebsaggregat ein Verbrennungsmotor ist.

In einer anderen Ausgestaltung der Erfindung erfolgt das Ändern der Übersetzungsverhältnisse des Getriebes zugkraftunterbrechungsfrei.

Ein Ändern der Übersetzungsverhältnisse des Getriebes, insbesondere ein Schalten in einen anderen Gang oder in einen anderen Betriebsmodus des Getriebes erfolgt zugkraftunterbrechungsfrei, wenn insbesondere für den Wechsel aus einem Betriebsmodus des Getriebes in einen anderen eines der Schaltelement seinen Zustand beibehält, ein zweites der Schaltelemente aus einem geschlossenen Zustand in einen geöffneten Zustand überführt wird und ein drittes der Schaltelemente aus einem geöffneten in einen geschlossenen Zustand überführt wird. Vorteilhaft wird ein Getriebe bereitgestellt, bei dem das Wechseln der Gangstufen ohne eine Unterbrechung der Zugkraft ermöglicht wird.

In einer anderen Ausgestaltung der Erfindung umfasst das Getriebe eine Ansteuerung zur Ansteuerung mindestens eines der Schaltelemente in Abhängigkeit eines vorgegebenen Betriebsvorgabesignals.

Es ist eine Ansteuerung vorgesehen welche in Abhängigkeit eines vorgegebenen Betriebsvorgabesignals, beispielsweise ein angefordertes Drehmoment, eine vorgegebene Drehzahl, oder ein bestimmter Betriebspunkt der Antriebsaggregate, mindestens eines der Schaltelemente ansteuert. Die genannten Parameter des Betriebsvorgabesignals können auf die Ausgangswelle des Getriebes, auf die Eingangswelle oder auf die mit den Antriebsaggregaten zu verbindenden Wellen bezogen sein. Vorteilhaft wird eine Steuerung des Getriebes ermöglicht. Bei einer Weiterentwicklung der Erfindung umfasst die Hybridantriebsanordnung einen Pulswechselrichter oder eine elektrische Energiequelle.

Der Pulswechselrichter is insbesondere zur Versorgung des zweiten Antriebsaggregates, sprich, der elektrischen Maschine, vorgesehen. Hierzu wandelt er insbesondere die elektrische Energie einer elektrischen Energiequelle, beispielsweise einer Batterie und/ oder einer Brennstoffzelle um.

Ferner umfasst die Erfindung ein Fahrzeug mit der beschriebenen Hybridantriebsanordnung.

Ein nicht beanspruchtes Verfahren zum Betrieb einer Hybridantriebsanordnung mit einem Getriebe umfasst folgende Schritte:
Ermitteln eines Betriebsvorgabesignals;
Ansteuern mindestens eines der Schaltelemente zur Einstellung der Funktionalität des Getriebes in Abhängigkeit des Betriebsvorgabesignals (BV).

Außerhalb des Rahmens der Ansprüche wird ein Verfahren zum Betrieb einer Hybridantriebsanordnung mit einem Getriebe bereitgestellt. Dabei wird ein Betriebsvorgabesignal ermittelt. Mindestens eines der Schaltelemente wird zur Einstellung der Funktionalität des Getriebes oder eines entsprechenden Betriebsmodus in Abhängigkeit des Betriebsvorgabesignals geschlossen oder geöffnet. Das Betriebsvorgabesignal wird in Abhängigkeit einer Betriebsstrategie, eines Fahrerwunsches oder Fahrpedals, eines Batteriemanagementsystems oder anderer beispielsweise in einem Fahrzeug verfügbaren Systemen vorgegeben. In Abhängigkeit dieses Betriebsvorgabesignals werden die Schaltelemente zur Einstellung der entsprechenden Funktionalität oder des Betriebsmodus des Getriebes angesteuert, insbesondere die Kupplungen oder Bremsen geschlossen oder geöffnet. Die Funktionalität des Getriebes oder der Betriebsmodus sind insbesondere die unterschiedlichen Übersetzungsverhältnisse der verschiedenen Gangstufen, oder die verschiedenen Modi oder Betriebsmodi, beispielsweise einen generatorischen Betrieb des zweiten Antriebsaggregates bei stillstehender Ausgangswelle oder der eCVT-Modus.

Vorteilhaft wird ein Verfahren für den Betrieb der Hybridantriebsanordnung bereitgestellt.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Im Folgenden soll die Erfindung anhand einiger Figuren näher erläutert werden, dazu zeigen:
Figur 1: eine schematische Darstellung der Hybridantriebsstranganordnung mit einem Getriebe.
Figur 2: eine Schaltmatrix des Getriebes.
Figur 3: ein schematisch dargestelltes Fahrzeug mit einer Hybridantriebstranganordnung.
Figur 4: ein schematisch dargestelltes, nicht beanspruchtes Verfahren zum Betrieb einer Hybridantriebstranganordnung.

### Ausführungsformen der Erfindung

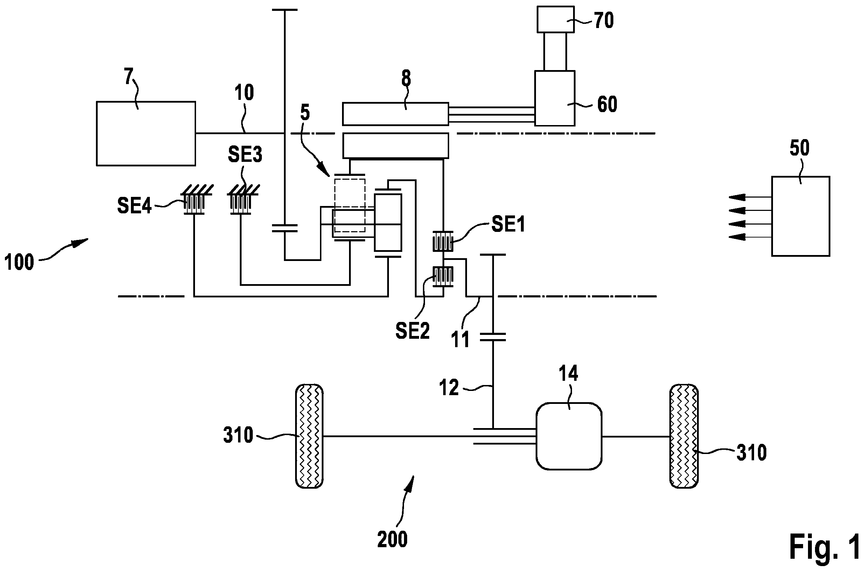

Die Figur 1 zeigt eine Hybridantriebstranganordnung 200 mit einem ersten Antriebsaggregat 7, ausgeführt als Verbrennungsmotor, und einem zweiten Antriebsaggregat 8, ausgeführt als elektrische Maschine, und einem Getriebe 100. Insbesondere umfasst die Hybridantriebstranganordnung einen Puls-wechselrichter 60 zur Versorgung des zweiten Antriebsaggregates 8 mit elektrischer Energie. Weiter umfasst die Hybridantriebstranganordnung 200 insbesondere eine elektrische Energiequelle 70, welche mit dem Pulswechselrichter 60 verbunden ist. Das Getriebe 100 umfasst die Eingangswelle 10 und die Ausgangswelle 11. Weiter umfasst das Getriebe 100 ein doppeltes Planetengetriebe 5 mit einem ersten Sonnenrad und einem ersten Hohlrad und einem zweiten Sonnenrad und einem zweiten Hohlrad und einem, insbesondere gemeinsamen, Planetenträger. Insbesondere ist das erste und das zweite Sonnenrad außenverzahnt. Insbesondere ist das erste und das zweite Hohlrad innenverzahnt. Erste Planeten stehen im Eingriff und kämmen mit dem ersten Hohlrad, wobei sie beabstandet das erste Sonnenrad umkreisen. Zweite, insbesondere gestufte, Planeten stehen im Eingriff mit dem ersten Sonnenrad, den ersten Planeten, dem zweiten Sonnenrad und dem zweiten Hohlrad, wobei die zweiten Planeten das erste und das zweite Sonnenrad kämmend umkreisen und mit dem zweiten Hohlrad und den ersten Planeten kämmen. Insbesondere sind die ersten und zweiten Planeten außenverzahnt. Ein gemeinsamer Planetenträger fixiert die Abstände der ersten und zweiten Planeten zueinander sowie jeweils untereinander. Weiter umfasst das Getriebe 100 ein erstes, und ein zweites Schaltelement SE1, SE2. Das erste Schaltelement SE1, insbesondere eine Kupplung, ist dazu eingerichtet, das erste Hohlrad des doppelten Planetengetriebes 5 mit der Ausgangswelle 11 zu verbinden oder zu trennen.

Das zweite Schaltelement SE2, insbesondere eine Kupplung, ist dazu eingerichtet, das zweite Hohlrad des doppelten Planetengetriebes 5 mit der Ausgangswelle zu verbinden oder zu trennen. Weiter weist das Getriebe 100 ein drittes Schaltelement SE3 auf. Das dritte Schaltelement SE3 , insbesondere eine Bremse, ist dazu eingerichtet, das erste Sonnenrad des doppelten Planetengetriebes 5 freizugeben oder abzubremsen, insbesondere in dem die Bremse das Hohlrad mit einem Fixpunkt verbindet oder beispielsweise am Gehäuse (nicht dargestellt) des Getriebes 100 abstützt. Weiter umfasst das Getriebe 100 ein viertes Schaltelement SE4.

Das vierte Schaltelement SE4, insbesondere eine Bremse, ist dazu eingerichtet, das zweite Sonnenrad des doppelten Planetengetriebes 5 freizugeben oder abzubremsen, insbesondere in dem die Bremse das Hohlrad mit einem Fixpunkt verbindet oder beispielsweise am Gehäuse (nicht dargestellt) des Getriebes 100 abstützt. Das Getriebe ist weiter dazu eingerichtet, für den Betrieb mit einem ersten Antriebsaggregat über die Eingangswelle 10 gekoppelt oder verbunden zu werden. In der

Figur 1 ist dazu dargestellt, dass die Welle des Antriebsaggregates 7 beispielsweise über ein Stirnradsatz mit der Eingangswelle 10 verbunden wird. Das zweite Antriebsaggregat 8, eine elektrische Maschine, wird für den Betrieb des Getriebes 100 wie in der Figur 1 dargestellt mit dem ersten Hohlrad des doppelten Planetengetriebes verbunden. Für eine Optimierung der Übersetzungsverhältnisse ist die Ausgangswelle 11 beispielsweise über einen Abtrieb 12, insbesondere ein Stirnradsatz, beispielsweise mit einem Differential 14 verbunden, über welches die Bewegungen auf die Räder 310 übertragen werden.

Für die Ansteuerung der Schaltelemente ist eine Ansteuerung 50 vorgesehen, die das Verfahren zum Betrieb der Hybridantriebsanordnung mit dem Getriebe ausführt. Die Steuerleitungen zwischen der Ansteuerung 50 und den einzelnen Schaltelementen SE1..SE4 sind aus Übersichtlichkeitsgründen nur als Pfeil angedeutet und nicht vollständig dargestellt. Die Kommunikation zwischen den Schaltelementen SE1..SE4 und der Vorrichtung kann mittels der Steuerleitungen als auch mittels eines BUS-Systems oder kabellos erfolgen.

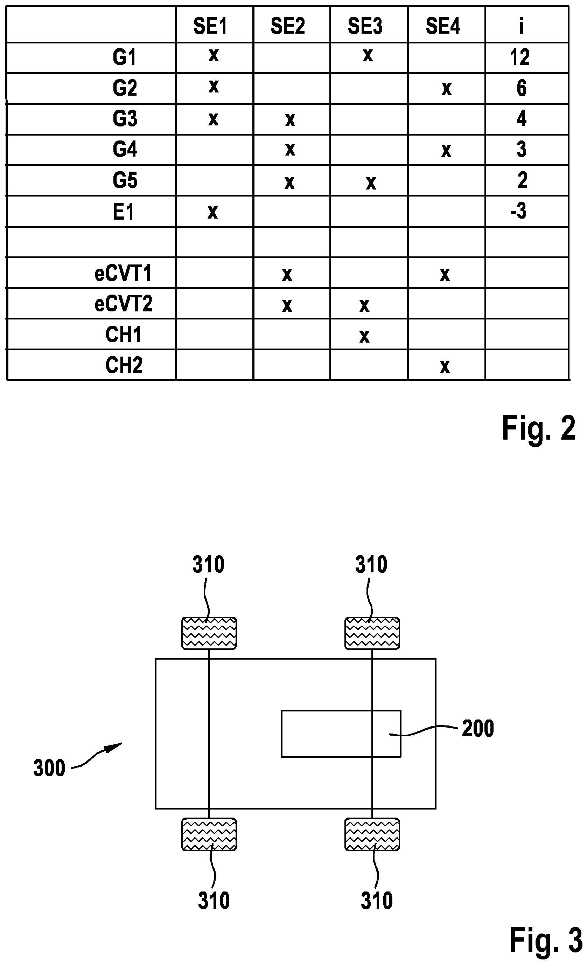

Figur 2 zeigt eine Schaltmatrix des Getriebes. In den Spalten sind die einzelnen Schaltelemente SE1..SE4 angegeben und in der letzten Spalte beispielhaft ein sich zwischen einem der Antriebsaggregate und der Ausgangswelle ergebendes ungefähres Übersetzungsverhältnis. In den Zeilen sind die unterschiedlichen Gangstufen, Gänge oder Betriebsmodi des Getriebes angegeben. Mittels Kreuzen ist in der Schaltmatrix dargestellt, welches der Schaltelemente aktiviert sein muss, damit sich der entsprechende Gang oder Betriebsmodus einstellt. Mit Aktivierung der Schaltelemente ist hierbei insbesondere gemeint, dass eine Kupplung geschlossen wird oder eine Bremse betätigt wird, sodass über die Kupplung eine Kraft von einer Welle auf eine weitere Welle übertragen wird oder mittels der Bremse eine Kraft auf einen Fixpunkt, insbesondere das Getriebegehäuse, übertragen wird. Aus der Schaltmatrix ist ersichtlich, dass sich je nach Kombination der vier Schaltelemente fünf Gänge G1.....G5 einstellen lassen, wobei der erste Gang G1 das höchste Übersetzungsverhältnis und der fünfte Gang G5 das niedrigste Übersetzungsverhältnis aufweist. Bei den Gängen G1..G5 liegt bevorzugt jeweils zwischen dem erstem Antriebsaggregat 7 und der Ausgangswelle 11 ein festes Drehzahlverhältnis entsprechend der in der letzten Spalte angegebenen Übersetzung an. Die Ausgangswelle wird in den Gängen G1..G5 entweder von dem ersten Antriebsaggregat 7 alleine oder mit dem zweiten Antriebsaggregat 8 zusammen angetrieben. Insbesondere sind dies verbrennungsmotorische oder hybridische Gänge, beispielsweise wenn das erste Antriebsaggregat 7 ein Verbrennungsmotor ist und das zweite Antriebsaggregat 8 eine elektrische Maschine. Diese Gänge ermöglichen auch eine Lastpunktanhebung des Verbrennungsmotors, so dass die elektrische Maschine generatorisch betrieben werden kann und ein Laden einer Batterie während des Betriebs, insbesondere Fahrbetrieb eines Fahrzeugs, erfolgen kann. In den folgenden Zeilen der Matrix schließt sich der Gang E1 oder Betriebsmodus an, in dem nur das zweite Antriebsaggregat 8 mit der Ausgangswelle 11 verbunden ist. Hierzu muss insbesondere das zweite, das dritte und das vierte Schaltelement SE2, SE3, S4 geöffnet sein und das erste Schaltelement SE 1 geschlossen sein, damit keine Verbindung zum ersten Antriebsaggregat 7 besteht. Dies ist insbesondere ein elektromotorischer Gang, beispielsweise wenn das zweite Antriebsaggregat eine elektrische Maschine ist. Vorteilhaft kann in diesem Gang ein Fahrzeug lokal emissionsfrei betrieben werden. Beispielhaft ergibt sich bei Verbinden des zweiten Antriebsaggregates 8 mittels dem ersten Schaltelement SE1 mit der Ausgangswelle 11 die in der Schaltmatrix angegebenen Übersetzung zwischen dem zweiten Antriebsaggregat 8 und der Abtriebswelle 11.

Mittels Schließens des zweiten und dritten oder vierten Schaltelementes SE2, SE3, SE4 und Öffnen des ersten SchaltelementesSE1 ergeben sich zweileistungsverzweigte Betriebmodi, die eCVT-Modi eCVT1, eCVT2, welche jeweils eine voneinander unabhängige Vortriebsleistung an der Ausgangswelle 11 und Ladeleistung des zweiten Antriebsaggregates 8 ermöglichen. Insbesondere eignen sich diese Betriebsmodi zum hybridischen Anfahren bei niedrigem Batterieladezustand, da ein stufenloses Verändern der Übersetzungsverhältnisse und damit insbesondere stufenloses Beschleunigen bei gleichzeitigem generatorischen Betrieb des zweiten Antriebsaggregates 8 möglich ist.

Zwei weitere Modi CH1, CH2 , oder auch Standladen, genannt, ergiben sich, wenn das dritte Schaltelement SE3 oder das vierte Schaltelement SE4 geschlossen sind und alle weiteren Schaltelemente geöffnet sind. Die Antriebsaggregate 7 und 8 werden dabei miteinander gekoppelt, wobei keine Verbindung zur Ausgangswelle 11 besteht. In diesem Betriebsmodus kann während des Stillstands der Ausgangswelle, insbesondere eines Fahrzeugs, mittels des ersten Antriebsaggregates 7 das zweite 8 angetrieben werden, beispielsweise generatorisch zum Laden einer elektrischen Energiequelle 70, insbesondere einer Batterie, verwendet werden. Alternativ kann mittels des zweiten Antriebsaggregates 8 auch das erste 7 angetrieben werden und beispielsweise ein Verbrennungsmotorstart oder eine Diagnose des Verbrennungsmotors durchgeführt werden.

Figur 3 zeigt ein Fahrzeug 300 mit Rädern 310, wobei das Fahrzeug eine Hybridantriebsanordnung 200, wie oben beschrieben, umfasst.

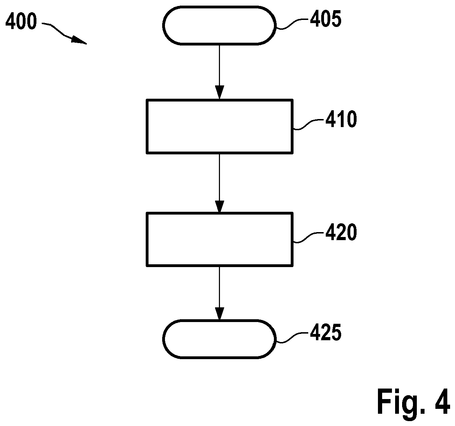

Figur 4 zeigt ein Ablaufdiagramm eines Verfahrens 400 zum Betrieb einer Hybridantriebsanordnung 200 mit einem Getriebe 100. Mit Schritt 405 startet das Verfahren. In Schritt 410 wird ein Betriebsvorgabesignal BV ermittelt und in Schritt 420 mindestens eines der Schaltelemente SE1....SE4 zur Einstellung der Funktionalität des Getriebes 100 in Abhängigkeit des Betriebsvorgabesignals BV angesteuert. Mit Schritt 425 endet das Verfahren. Das Betriebsvorgabesignal BV ist hierbei entweder ein Parameter für eine physikalische Größe im Getriebe 100 wie z.B. ein Drehmoment oder eine Drehzahl oder eine zu übertragende Leistung, welche an einer Komponente des Getriebes 100 anliegen oder übertragen werden soll. Diese Komponenten sind insbesondere die Eingangswelle 10, die Ausgangswelle 11 aber auch die Parameter an den Antriebsaggregaten 7, 8 oder den Schaltelementen SE1..SE4. Darüber hinaus kann das Betriebsvorgabesignal BV auch einen bestimmten Betriebsmodus wie einen der fünf Gänge G1.....G5 oder der Gang E1, welcher nur mit dem zweiten Antriebsaggregat betrieben wird, oder auch die besonderen Funktionen eCVT1, eCVT2 oder Standladen CH1, CH2 darstellen. In Abhängigkeit dieses Betriebsvorgabesignals BV werden die Schaltelemente SE1 bis SE4 entsprechend der Schaltmatrix angesteuert, um das Getriebe 100 in den entsprechenden Gang oder Betriebsmodus zu schalten. Für eine zugkraftunterbrechungsfreie Umschaltung zwischen den einzelnen Gängen oder Betriebsmodi ist es notwendig, dass eines der Schaltelemente SE1....SE4 seinen Zustand vor und nach der Schaltung beibehält, wobei ein weiteres Schaltelement während des Schaltens aus dem geöffneten in den geschlossenen Zustand übergeht, während ein anderes aus dem geschlossenen in den geöffneten Zustand übergeht.

## Patentansprüche

1. Hybridantriebsanordnung (200) mit einer Verbrennungskraftmaschine als erstes Antriebsaggregat (7), einer elektrischen Maschine als zweites Antriebsaggregat (8) und einem mit den zwei Antriebsaggregaten (7,8) gekoppelten Getriebe, wobei das Getriebe (100) eine Eingangswelle (10) und eine Ausgangswelle (11), mindestens ein erstes, ein zweites, ein drittes und ein viertes Schaltelement (SE1, SE2, SE3, SE4),
und mindestens ein doppeltes Planetengetriebe (5) hat, mit einem ersten Sonnenrad und einem ersten Hohlrad und einem zweiten Sonnenrad und einem zweiten Hohlrad und einem Planetenträger,
wobei das erste Antriebsaggregat mit der Eingangswelle (10) gekoppelt ist, wobei
die Eingangswelle (10) mit dem Planetenträger des doppelten Planetengetriebes (5) gekoppelt ist,
und die Ausgangswelle (11) mittels dem ersten Schaltelement (SE1) koppelbar ist mit dem ersten Hohlrad des doppelten Planetengetriebes (5) und mittels dem zweiten Schaltelement (SE2) koppelbar ist mit dem zweiten Hohlrad des doppelten Planetengetriebes (5), und wobei
dass das dritte Schaltelement (SE3) dazu eingerichtet ist, das erste Sonnenrad des doppelten Planetengetriebes (5) abzubremsen oder freizugeben, und dass das vierte Schaltelement (SE4) eingerichtet ist, das zweite Sonnenrad des doppelten Planetengetriebes (5) abzubremsen oder freizugeben, **dadurch gekennzeichnet, dass** das zweite Antriebsaggregat (8) mit dem ersten Hohlrad des doppelten Planetengetriebes (5) gekoppelt ist.

2. Hybridantriebsanordnung (200) nach Anspruch 1 ,
wobei das erste und/ oder das zweite Schaltelement (SE1, SE2) eine Kupplung umfasst.

3. Hybridantriebsanordnung (200) nach einem der vorhergehenden Ansprüche,
wobei das dritte und/ oder vierte Schaltelement (SE3, SE4) eine Bremse umfasst.

4. Hybridantriebsanordnung (200) nach einem der vorhergehenden Ansprüche,
wobei ein Ändern der Übersetzungsverhältnisse des Getriebes (100) zugkraftunterbrechungsfrei erfolgt.

5. Hybridantriebsanordnung (200) nach einem der vorhergehenden Ansprüche,
mit einer Ansteuerung (50) zur Ansteuerung mindestens eines der Schaltelemente (SE1..SE4) in Abhängigkeit eines vorgegebenen Betriebsvorgabesignals (BV).

6. Fahrzeug (300) mit einer Hybridantriebsanordnung (200) nach einem der Ansprüche 1 bis 5.

## Claims

1. Hybrid drive arrangement (200) with an internal combustion engine as first drive unit (7), an electric machine as second drive unit (8), and a transmission which is coupled to the two drive units (7, 8), the transmission (100) having an input shaft (10) and an output shaft (11), at least a first, second, third and a fourth shifting element (SE1, SE2, SE3, SE4), and at least one double planetary gear mechanism (5), with a first sun gear and a first internal gear and a second sun gear and a second internal gear and a planetary carrier, the first drive unit being coupled to the input shaft (10), the input shaft (10) being coupled to the planetary carrier of the double planetary gear mechanism (5), and it being possible for the output shaft (11) to be coupled by means of the first shifting element (SE1) to the first internal gear of the double planetary gear mechanism (5), and to be coupled by means of the second shifting element (SE2) to the second internal gear of the double planetary gear mechanism (5), and the third shifting element (SE3) being configured to brake or to release the first sun gear of the double planetary gear mechanism (5), and the fourth shifting element (SE4) being configured to brake or to release the second sun gear of the double planetary gear mechanism (5), **characterized in that** the second drive unit (8) is coupled to the first internal gear of the double planetary gear mechanism (5).

2. Hybrid drive arrangement (200) according to Claim 1, the first and/or the second shifting element (SE1, SE2) comprising a clutch.

3. Hybrid drive arrangement (200) according to either of the preceding claims, the third and/or fourth shifting element (SE3, SE4) comprising a brake.

4. Hybrid drive arrangement (200) according to one of the preceding claims, a change in the transmission ratios of the transmission (100) taking place without an interruption in traction power.

5. Hybrid drive arrangement (200) according to one of the preceding claims, with an actuator means (50) for actuating at least one of the shifting elements (SE1...SE4) in a manner which is dependent on a predefined operating specification signal (BV).

6. Vehicle (300) with a hybrid drive arrangement (200) according to one of Claims 1 to 5.

## Revendications

1. Agencement d'entraînement hybride (200) avec un moteur à combustion interne en tant que premier groupe d'entraînement (7), une machine électrique en tant que deuxième groupe d'entraînement (8) et une transmission couplée aux deux groupes d'entraînement (7, 8), la transmission (100) comprenant un arbre d'entrée (10) et un arbre de sortie (11),
au moins un premier, un deuxième, un troisième et un quatrième élément de commutation (SE1, SE2, SE3, SE4),
et au moins un engrenage planétaire double (5), avec une première roue solaire et une première couronne, et une deuxième roue solaire et une deuxième couronne, et un porte-satellites,
le premier groupe d'entraînement étant couplé à l'arbre d'entrée (10),
l'arbre d'entrée (10) étant couplé au porte-satellites de l'engrenage planétaire double (5),
et l'arbre de sortie (11) pouvant être couplé à la première couronne de l'engrenage planétaire double (5) au moyen du premier élément de commutation (SE1) et pouvant être couplé à la deuxième couronne de l'engrenage planétaire double (5) au moyen du deuxième élément de commutation (SE2), et le troisième élément de commutation (SE3) étant adapté pour freiner ou libérer la première roue solaire de l'engrenage planétaire double (5), et le quatrième élément de commutation (SE4) étant adapté pour freiner ou libérer la deuxième roue solaire de l'engrenage planétaire double (5), **caractérisé en ce que** le deuxième groupe d'entraînement (8) est couplé à la première couronne de l'engrenage planétaire double (5).

2. Agencement d'entraînement hybride (200) selon la revendication 1, le premier et/ou le deuxième élément de commutation (SE1, SE2) comprenant un embrayage.

3. Agencement d'entraînement hybride (200) selon l'une quelconque des revendications précédentes, le troisième et/ou le quatrième élément de commutation (SE3, SE4) comprenant un frein.

4. Agencement d'entraînement hybride (200) selon l'une quelconque des revendications précédentes, une modification des rapports de transmission de la transmission (100) s'effectuant sans interruption de la force de traction.

5. Agencement d'entraînement hybride (200) selon l'une quelconque des revendications précédentes, avec une commande (50) pour la commande d'au moins un des éléments de commutation (SE1...SE4) en fonction d'un signal de consigne de fonctionnement (BV) prédéfini.

6. Véhicule (300) avec un agencement d'entraînement hybride (200) selon l'une quelconque des revendications 1 à 5.
